# FASCICULE DE BREVET EUROPEEN

(11) **EP 2 577 176 B1**
(45) Date de publication et mention de la délivrance du brevet: **21.09.2016**
(21) Numéro de dépôt: 11786201.1
(22) Date de dépôt: 25.05.2011
(51) Int. Cl.: F24D 3/18, F24H 4/02, F24D 3/00, F24D 17/02, F25B 30/02

(54) **SYSTEME DE CHAUFFAGE AVEC POMPE A CHALEUR MONOBLOC EXTERIEURE A CAPTEUR EVAPORATEUR SOLAIRE**
HEIZUNGSSYSTEM MIT EINER MONOBLOCK WÄRMEPUMPE FÜR DEN AUSSENBEREICH MIT EINEM INTEGRIERTEN SONNENKOLLEKTOR ALS VERDAMPFER
HEATING SYSTEM COMPRISING AN OUTDOOR SINGLE UNIT HEAT PUMP WITH AN INTEGRAL SOLAR COLLECTOR AS EVAPORATOR

(30) Priorité: 28.05.2010 FR 1002263
(43) Date de publication de la demande: 10.04.2013
(73) Titulaire: Bernier Developpement, 35500 Poce Les Bois (FR); Bernier, Jacques, 35500 Poce Les Bois (FR)
(72) Inventeur: BERNIER, Jacques, F-35500 Poce Les Bois (FR)
(74) Mandataire: Ermeneux, Bertrand
(86) Numéro de dépôt international: PCT/FR2011/051192
(87) Numéro de publication internationale: WO 2011/148102

(56) Documents cités:
- BE-A1- 901 799
- DE-U1- 8 302 548
- FR-A1- 2 431 663
- FR-A1- 2 547 027
- GB-A- 1 604 242
- GB-A- 2 365 518
- US-A- 4 693 089
- US-A1- 2010 031 953

## Description

### 1. Domaine de l'invention

Le domaine de l'invention est celui des pompes à chaleur. Plus précisément, l'invention concerne un système de chauffage utilisant un ensemble monobloc se montant à l'extérieur d'un bâtiment, formant une pompe à chaleur.

### 2. Art antérieur

Diverses techniques de pompe à chaleur captant de l'énergie solaire ont été proposées dans le but de réduire la consommation d'énergie requise pour chauffer l'eau ou l'air.

On connaît ainsi des systèmes de pompe à chaleur avec capteurs évaporateurs aérosolaires utilisés comme source froide, décrits par exemple dans le brevet français FR-83 12117 du même inventeur que la présente demande.

Un tel système de pompe à chaleur avec capteur aérosolaire, formé en plusieurs éléments, présente l'avantage de permettre de réaliser des économies substantielles en termes de consommation d'énergie électrique requise pour la production d'eau chaude sanitaire.

Sur un plan environnemental, on constate que les fluides frigorigènes classiquement utilisés en relation avec des techniques connues de pompe à chaleur fonctionnant à partir d'énergie solaire, sont des fluides de sécurité de type chloro-fluoro-carbures, hydro-chloro-fluoro-carbures ou encore hydro-fluoro-carbures avec un potentiel d'effet de serre compris entre 1300 kg et 3800 kg de CO2 par kilogramme de fluide frigorigène.

On connaît des documents FR2431663 A1 et FR2547027 A1 des exemples de pompes à chaleur de type "monobloc air-eau" et du document BE901799 A1 un exemple de pompe à chaleur de type "split". On connaît par ailleurs du document GB2365518 A un exemple de panneau capteur solaire fixé sur un mur extérieur d'un bâtiment.

### 3. Inconvénients de l'art antérieur

On observe que les systèmes connus de pompe à chaleur solaire ne sont pas livrés sous une forme monobloc, du fait notamment qu'ils comportent une partie frigorifique destinée à être placée à l'intérieur des bâtiments. Ceci nécessite donc de procéder au montage et à la mise en service de la pompe à chaleur sur chantier, ce qui n'est pas satisfaisant.

Par ailleurs, du fait de la présence de composants frigorifiques à l'intérieur du bâtiment, l'utilisation d'hydrocarbures comme fluide frigorigène n'est pas envisageable, pour des raisons évidentes de sécurité.

Un autre inconvénient de ces techniques connues est que l'opération de montage d'une pompe à chaleur étant relativement complexe, et qu'elle peut en outre conduire à des fuites de fluide lors de l'utilisation de raccords frigorifiques à opercule. En effet, il est admis que ces raccords sont assez délicats d'utilisation.

Le personnel assurant la mise en oeuvre et la maintenance doit être qualifié frigoriste ce qui limite énormément les possibilités de développement des systèmes actuels de pompe à chaleur. De plus les quantités de fluides frigorigènes mises en oeuvre imposent un contrôle annuel d'étanchéité des installations.

Par ailleurs, il est clair que les fluides frigorigènes utilisés dans ces systèmes ont une action néfaste sur l'effet de serre et sur la destruction de la couche d'ozone.

### 4. Objectifs de l'invention

C'est d'une manière générale un but de l'invention de fournir un système de chauffage, par exemple via un radiateur ou un ventilo-convecteur, et/ou de production d'eau chaude sanitaire, par pompe à chaleur, préférentiellement sous forme de kit, ne présentant pas les défauts des systèmes connus.

L'invention a notamment pour objectif de proposer un système de pompe à chaleur facile à installer, et en particulier dont l'installation puisse être confiée à du personnel non qualifié frigoriste.

Un objectif de l'invention est également de fournir un système qui soit performant sur un plan énergétique, et qui permette notamment de réaliser jusqu'à 75% d'économie d'énergie par rapport à une installation de chauffage électrique et/ou de production d'eau chaude sanitaire utilisant une résistance d'électricité.

Un autre objectif de l'invention est de fournir une technique qui autorise l'utilisation d'hydrocarbures tels l'isobutane, le propane ou autres, comme fluides frigorigènes, afin de réduire l'impact sur la couche d'ozone et sur l'effet de serre.

Notamment, dans au moins un mode de réalisation de l'invention, un objectif particulier de l'invention est de fournir une technique de chauffage et/ou de production d'eau chaude sanitaire qui soit conforme à la norme de sécurité EN378-3

Encore un objectif de l'invention, est de fournir un système qui soit fiable et sûr.

Un autre objectif de l'invention est de fournir un système qui soit peu coûteux, et qui puisse se présenter en kit.

L'invention a encore pour objectif de proposer un système adapté au remplacement de convecteurs électriques existants.

### 5. Exposé de l'invention

Ces objectifs, ainsi que d'autres qui apparaitront par la suite sont atteints à l'aide d'un système, ou installation, de chauffage et/ou de production d'eau chaude par pompe à chaleur monobloc extérieure comprenant au moins un panneau capteur évaporateur à convection naturelle fixé sur un mur par des pattes de fixation l'éloignant de quelques centimètres du mur, le dit capteur étant raccordé à un compresseur qui est placé dans un caisson avec les autres composants frigorifiques, l'ensemble étant chargé en fluide frigorigène, le caisson étant lui même en liaison avec le mur.

Dans le cadre de l'invention, le terme "pompe à chaleur" doit être entendu dans son acception générale. Il vise ainsi un dispositif comprenant au moins, de façon connue en soi, un compresseur, au moins un échangeur de chaleur formant évaporateur, et au moins un échangeur de chaleur formant condenseur intégrés dans un circuit de fluide frigorigène.

Il convient de noter que le système intégrant les composants de la pompe à chaleur autres que le panneau capteur évaporateur à l'intérieur d'un caisson, la sécurité du système est ainsi assurée.

Par ailleurs, l'unité de pompe à chaleur extérieure monobloc est fixée sur le mur à l'aide de pattes de fixation permettant d'éloigner le capteur évaporateur de la cloison et de bénéficier ainsi de la convection naturelle de l'air extérieur sur la face arrière du capteur évaporateur.

Le caisson comporte en outre avantageusement un orifice permettant de passer à l'intérieur du bâtiment les deux tuyaux de chauffage et l'alimentation électrique.

Dans au moins un mode de réalisation particulier de l'invention, un radiateur à eau chaude est raccordé à la pompe à chaleur monobloc extérieure par deux tuyauteries formant ainsi un système de chauffage individuel complet avec un thermostat d'ambiance.

Dans au moins un mode de réalisation particulier de l'invention, un ballon d'eau chaude comportant un échangeur est raccordé à la pompe à chaleur monobloc extérieure par deux tuyauteries formant ainsi un système de production d'eau chaude sanitaire complet avec un thermostat.

Dans au moins un mode de réalisation particulier de l'invention, un ventilo-convecteur à eau chaude est raccordé à la pompe à chaleur monobloc extérieure par deux tuyauteries formant ainsi un système de chauffage individuel complet.

Selon un aspect particulier de l'invention, le fluide frigorigène est un hydrocarbure du type R-600a, R-290 ou autre.

On obtient ainsi un système dont l'impact sur l'effet de serre (GWP=3), en cas de fuite ou de libération dans l'atmosphère de fluide frigorigène, est environ mille fois inférieur à celui des HFC ou HCFC utilisés classiquement dans les machines frigorifiques. Par ailleurs, on constate que les performances énergétiques du système selon l'invention sont supérieures à celle d'une pompe à chaleur utilisant un HFC ou un HCFC.

Selon un aspect particulier de l'invention, les composants hydrauliques tels la pompe, le vase d'expansion sont placés à l'intérieur du caisson extérieur calorifugé ou à l'intérieur du bâtiment, le purgeur dégazeur ou soupape étant installé dans le caisson.

Avantageusement, un orifice est pratiqué en partie basse du caisson pour évacuer à l'extérieur le gaz frigorigène en cas de fuite.

Selon un aspect particulier de l'invention, une cloison étanche est placée dans le caisson afin de séparer la partie hydraulique de la partie frigorifique.

Selon un aspect particulier de l'invention, le compresseur est à fréquence variable.

Dans au moins un mode de réalisation particulier de l'invention, le capteur évaporateur comporte une alimentation en liquide frigorigène détendu par le canal puis un premier répartiteur, des canaux remontent verticalement le mélange liquide et vapeur frigorigène puis le renvoie vers des canaux horizontaux où l'évaporation du liquide frigorigène augmente. Le mélange riche en vapeur descend vers des canaux où l'évaporation se termine, le gaz est alors surchauffé puis recueilli par le canal avant aspiration par le compresseur.

Selon un aspect particulier de l'invention, les capteurs sont reliés au caisson compresseur par des tuyauteries souples afin de permettre l'emballage du système monobloc avec plusieurs capteurs, l'alimentation en liquide des capteurs s'effectuant à partir d'un distributeur de liquide par des tuyauteries de même longueur respectivement, le retour de vapeur des capteurs s'effectuant par des tuyauteries de même longueur respectivement reliées à un collecteur d'aspiration.

### 6. Liste des figures

L'invention sera mieux comprise à la lecture de la description détaillée de modes de réalisation de l'invention, donnés à titre de simples exemples illustratifs et non limitatifs, et en référence aux dessins annexés dans lesquels :
- La figure 1 est un schéma d'un système selon l'invention dans lequel le caisson abritant les autres composants est placé sur le côté du capteur évaporateur.
- La figure 2 représente en vue de dessus un exemple de montage d'un système selon l'invention couplé à un radiateur à eau chaude.
- La figure 3 représente en vue de côté un exemple de montage sur site d'un système selon l'invention couplé à un radiateur à eau chaude.
- La figure 4 représente en vue de côté un exemple de montage sur site d'un système selon l'invention couplé à un ballon de production d'eau chaude sanitaire.
- La figure 5 représente en vue de côté un exemple de montage sur site d'un système selon l'invention couplé à un ventilo-convecteur à eau chaude.
- La figure 6 représente une variante de la figure 2 concernant la position du capteur évaporateur.
- La figure 7 est un schéma d'un système selon l'invention dans lequel le caisson abritant les autres composants est placé au milieu du panneau capteur évaporateur.
- La figure 8 et la figure 9 représentent un exemple de montage sur site du système de la figure 7.
- La figure 10 représente un système selon l'invention, avant son installation, comportant plusieurs panneaux capteurs évaporateurs reliés au caisson compresseur par des tuyauteries souples.
- La figure 11 représente le système de la figure 10 tel qu'il se trouve dans son emballage d'expédition ;
- Les figures 12A et 12B sont des courbes de montée en température de l'eau du ballon d'eau chaude du système présenté en référence à la figure 4, respectivement de nuit et de jour.

### 7. Description détaillée

### 7.1. Rappel du principe de l'invention :

L'invention propose un système de chauffage et/ou de
production d'eau chaude sanitaire selon la revendication 1, mettant en oeuvre un ou plusieurs panneaux
capteurs solaires atmosphériques formant évaporateur, associé(s) à des composants frigorifiques de sorte à former une pompe à chaleur à compression monobloc configurée pour être installée à l'extérieur d'un bâtiment, le système comprenant en outre un circuit hydraulique d'eau ou de liquide antigel comprenant un émetteur de chaleur, tel que par exemple un radiateur se montant à l'intérieur du bâtiment et/ou à un échangeur d'un ballon d'eau chaude.

L'invention propose également un procédé de mise en place d'un tel système sur une paroi extérieure d'un bâtiment selon la revendication 10.

### 7.2 Exemples de mode de réalisation de l'invention

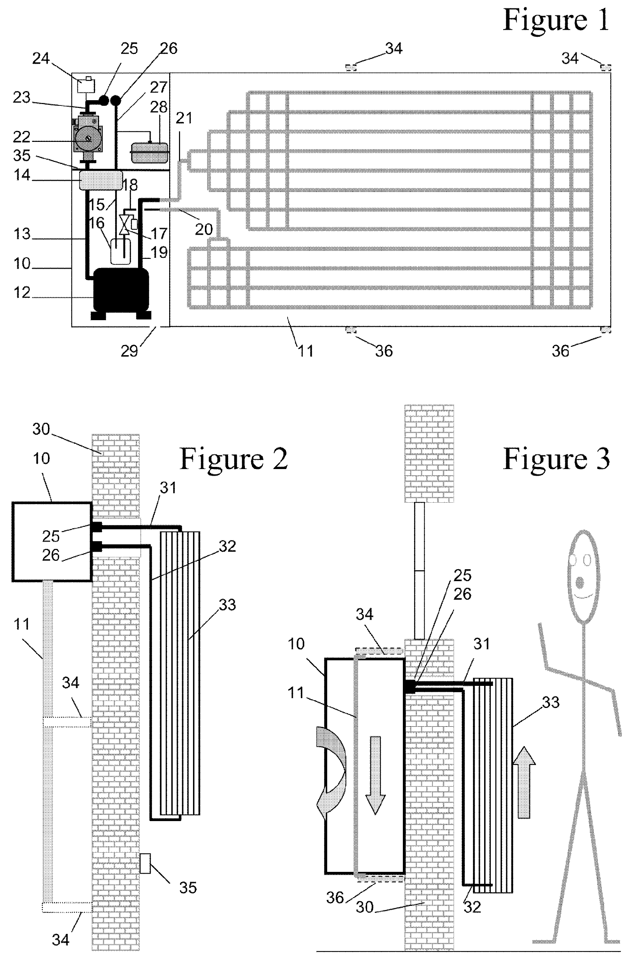

Un système de chauffage et/ou de production d'eau chaude sanitaire par pompe à chaleur monobloc extérieure à capteur évaporateur selon l'invention, représenté figure 1, comporte un ou plusieurs capteurs évaporateurs 11, encore appelés panneaux capteurs évaporateurs, ou, par raccourci, panneaux dans la suite de la description, raccordés à un caisson thermodynamique 10 par l'intermédiaire de deux canaux d'entrée 20 et de sortie 21. Les capteurs 11 sont, dans un mode de réalisation préféré, réalisés en aluminium laminé avec canaux intégrés selon le procédé "Roll-bond" utilisé dans la fabrication des réfrigérateurs ménagers. Le circuitage intégré des panneaux pourra être similaire à celui décrit dans le brevet FR-83/12117, du 21 juillet 1983. Dans d'autres modes de réalisation de l'invention, les capteurs 11 peuvent être en acier, en acier inoxydable en cuivre ou autre matériau sur lequel sont sertis, brasés ou intégrés des canaux permettant de distribuer le fluide frigorigène de façon équilibrée dans le panneau tout en favorisant les échanges thermiques. La dimension des panneaux 11 est par exemple de 0,80x2m. Les panneaux 11 sont pliés sur les côtés afin de rigidifier l'ensemble et permettre leur fixation contre le mur du bâtiment par l'intermédiaire de pattes de fixation 34, 36. Un côté du panneau est fixé sur un caisson 10 fermé, métallique de préférence, à l'intérieur duquel sont placés les autres éléments du circuit frigorifique à compression. Les pattes de fixation 34, 36 du capteur 11 permettent de maintenir un espace de 10 à 20 cm entre l'arrière du panneau et le mur afin de laisser circuler l'air extérieur par convection sur l'arrière du panneau. Le caisson 10 quand à lui de forme parallélépipèdique est fixé directement de façon étanche sur le mur du bâtiment. Deux orifices 25, 26 permettent le passage des tubes de chauffage face côté mur, un autre passage est réalisé à proximité pour l'alimentation électrique de l'appareil. A l'intérieur du caisson 10 est placé un compresseur frigorifique 12 de type à piston, rotatif, à spirales ou autre. Dans un mode de réalisation particulier de l'invention, il peut être envisagé que le compresseur soit de type à vitesse variable "Inverter". Le système frigorifique monobloc est chargé d'usine en fluide frigorigène, et plus précisément de 300g de propane dans ce mode de réalisation de l'invention. Préférentiellement, le fluide frigorigène utilisé dans le circuit est du type hydrocarbure tel le R-600a, le R-290 (propane), mais il peut également s'agir d'un fluide frigorigène du type R-134a ou autre. Le compresseur 12 aspire par l'intermédiaire de la tuyauterie 19 les vapeurs formées dans le capteur 11 sortant du canal 21. Il dirige par la tuyauterie 13 les gaz comprimés haute pression vers le condenseur 14 où ceux-ci se condensent en cédant de la chaleur au circuit de chauffage. Le liquide frigorigène formé est envoyé vers le filtre déshydrateur réservoir 16 par la tuyauterie 15. Le liquide frigorigène est ensuite détendu par le détendeur 17, de préférence de type thermostatique ou électronique, puis injecté à basse pression dans le capteur 11 par les tuyauteries 18, 20. Le liquide frigorigène se vaporise dans le capteur 11 en prélevant la chaleur du rayonnement solaire sur le capteur ainsi que la chaleur de l'air extérieur par convection naturelle mais aussi la chaleur prélevée à l'eau de pluie. Le circuit frigorifique est complété par un pressostat de sécurité basse et haute pression, installé de préférence sur le réservoir 16. Un orifice 29 permet d'évacuer directement à l'extérieur toute fuite éventuelle de gaz. Le condenseur 14, de préférence à plaques brasées, échange la chaleur de condensation avec le liquide de chauffage circulant dans son autre circuit. Le liquide à chauffer arrive dans l'appareil par le passage 26, puis par la tuyauterie 27, il se réchauffe dans le condenseur 14 puis est propulsé vers la tuyauterie 23 par la pompe 22 avant d'être envoyé chaud vers le bâtiment par le passage 25. Le liquide chauffé peut notamment être de l'eau ou du liquide antigel. Le circuit hydraulique est complété par un vase d'expansion 28 destiné à compenser la dilatation du liquide contenu dans l'appareil de chauffage situé à l'intérieur du bâtiment. Le volume du vase d'expansion est de l'ordre de 0,5 litre dans ce mode de réalisation de l'invention. Un purgeur dégazeur automatique 24 est placé en partie haute du circuit hydraulique. Ce purgeur est destiné à évacuer l'air du circuit hydraulique mais aussi le gaz frigorigène en cas de rupture des parois du condenseur 14, évitant ainsi que le gaz se propage à l'intérieur des locaux. Il peut être prévu de remplacer ce purgeur par une soupape de sécurité tarée à 3 bars. Le caisson 10 comporte une cloison étanche séparant la partie frigorifique à frigorigène hydrocarbure de la partie hydraulique en liaison avec l'intérieur du bâtiment. Afin de limiter les bruits, le compresseur 12 est fixé sur une tôle perforée, elle même posée sur le fond du caisson 10 après avoir intercalé un isolant acoustique (non représenté). Le caisson 10 est par ailleurs isolé thermiquement afin de ne pas perdre la chaleur du compresseur et des autres composants.

Le caisson 10 comporte une façade démontable afin d'accéder aux divers composants et de permettre les raccordements hydrauliques et électriques.

On observe en outre sur la figure 1 qu'avantageusement le système selon l'invention ne nécessite pas de système de dégivrage.

L'ensemble des composants hydrauliques peut également être installé à l'intérieur du bâtiment au lieu d'être monté à l'extérieur dans le caisson 10.

La figure 2 et la figure 3 représentent un exemple de montage d'un système selon l'invention couplée à un radiateur à eau chaude. Un trou est réalisé sur le mur extérieur 30 en face des passages 25, 26. La tuyauterie 31, par exemple sous forme d'un tuyau flexible, alimente en partie haute en liquide chaud le radiateur 33. La tuyauterie de retour 32, constituée dans ce mode de réalisation de l'invention d'un flexible, renvoie le liquide refroidi vers le passage 26 de la pompe à chaleur monobloc. Le radiateur ne comporte aucune vanne de réglage ou de fermeture. Un robinet de remplissage et de purge d'air est installé en haut de ce radiateur et un robinet de vidange est prévu en bas de celui-ci (non représentés). L'orifice réalisé dans le mur extérieur a un diamètre compris entre 50 et 90 mm, et préférentiellement compris entre 60 et 80 mm, et sert également à l'alimentation électrique de la pompe à chaleur monobloc ainsi qu'au raccordement du thermostat 35, ce dernier assurant la mise en service du compresseur 12 et de la pompe de circulation 22 en fonction de la température souhaitée dans l'ambiance. Il peut être envisagé de remplacer le thermostat 35 par une sonde de température dans le cas notamment de l'utilisation d'un compresseur à vitesse variable. Il peut être prévu que le thermostat 22 intègre un interrupteur marche/arrêt.

Le remplissage du circuit hydraulique est effectué de préférence en liquide antigel au niveau haut du radiateur de façon gravitaire ou par tout autre moyen approprié. Le radiateur est dans ce mode de réalisation de l'invention de type standard en acier ou en aluminium, sans vanne d'arrêt ni de réglage et est calculé de préférence pour une émission maximum de température à 45°C.

Dans ce mode de réalisation de l'invention, le système produit en moyenne une puissance de chauffage de 1400W pour 390W consommés par la pompe à chaleur monobloc et la pompe de circulation 22, ce qui correspond à un coefficient de performance (COP) de 3,58, dans un régime, dit régime nominal, dans lequel la température extérieure est de 7°C, l'ensoleillement reçu par le capteur évaporateur est de 150W/m², et la température de l'eau du circuit hydraulique est comprise entre 35°C et 40°C. Le COP présente une valeur égale respectivement à 3 et 2,60 lorsque la température du circuit hydraulique est égale à 60°C ou 65°C, pour une température extérieure égale à 7°C et un ensoleillement de 150W/m².

On notera par ailleurs que le système selon l'invention peut fonctionner lorsque la température extérieure passe au dessous de 0°C, et jusqu'à -15°C.

Dans le cas du remplacement d'un convecteur électrique par le système selon l'invention de pompe à chaleur monobloc couplé à un radiateur à eau chaude, l'alimentation électrique du convecteur est conservée pour alimenter électriquement l'appareil et le radiateur est placé à l'emplacement où se trouvait le convecteur. L'orifice réalisé dans le mur pour le passage de tuyauteries et câbles peut par exemple être rebouché par de la mousse de polyuréthane. Le caisson 10 est fixé sur le mur 30 de façon à rendre étanche à l'eau le raccordement à travers le mur.

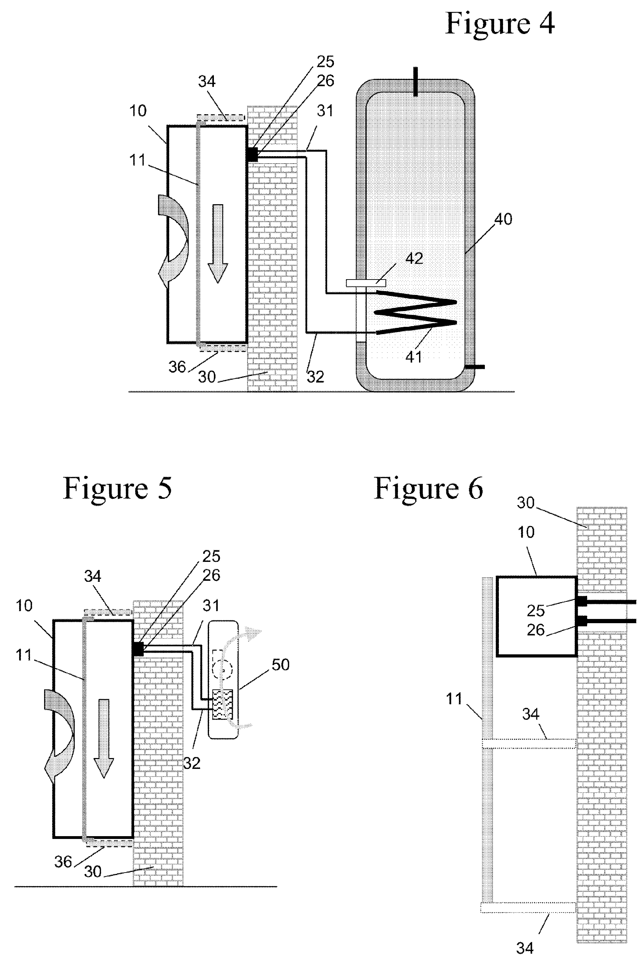

La figure 4 représente en vue de côté un exemple de montage sur site d'un système selon l'invention couplé à un ballon de production d'eau chaude sanitaire. Il convient de noter que dans ce mode de réalisation de l'invention, la pompe à chaleur monobloc du système selon l'invention présente avantageusement une température au niveau du condenseur égale à 65°C, et est d'un puissance convenable, pour permettre de produire directement de l'eau chaude sanitaire, stockée à une température d'environ 60°C dans le ballon d'eau chaude, sans qu'il soit nécessaire de prévoir un dispositif complémentaire pour chauffer l'eau. Le montage s'effectue comme pour celui du radiateur à eau chaude décrit ci avant. Un ballon d'eau chaude 40 avec échangeur 41 est installé à l'intérieur du bâtiment. Les tuyauteries 31, 32 servent à l'alimentation en eau chaude de l'échangeur 41. Un thermostat 42 est placé dans le doigt de gant du ballon, ce dernier assurant la mise en service du compresseur 12 et de la pompe de circulation 22 en fonction de la température souhaitée dans l'ambiance. Il peut être envisagé de remplacer le thermostat 42 par une sonde de température dans le cas notamment de l'utilisation d'un compresseur à vitesse variable. Il peut en outre être prévu que le thermostat 42 intègre un interrupteur marche/arrêt. Les tuyauteries 31, 32 sont par ailleurs calorifugées afin d'éliminer les pertes thermiques.

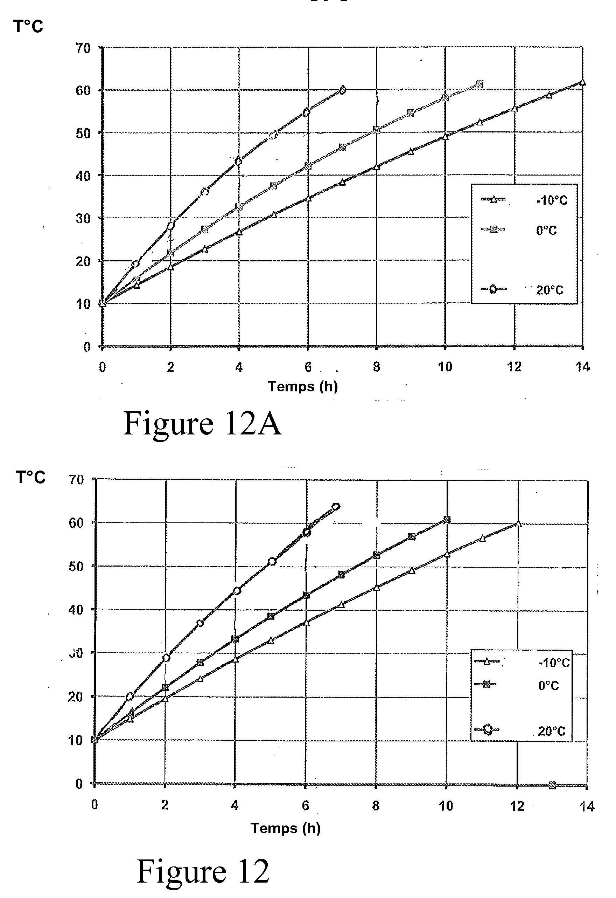

Dans le local technique, un robinet de remplissage et de purge d'air est installé en point haut et un robinet de vidange en bas (non représentés). Les figures 12A et 12B sont des courbes de montée en température de l'eau du ballon du système de production d'eau chaude sanitaire selon l'invention présenté en référence à la figure 4, respectivement de nuit et de jour pour différentes températures extérieures.

Sur la figure 12A, on peut ainsi voir qu'il faut environ 7 heures en été pour élever la température de l'eau du ballon de 10°C à 60°C lorsque la température extérieure est égale à 20°C en moyenne, et 14 heures pour parvenir au même résultat en hivers lorsque la température est égale à -10°C.

Lorsque le capteur évaporateur est exposé au soleil et plus précisément à un rayonnement solaire d'environ 300W/m² (voir la figure 12B), ces durées sont réduites à 6 heures en été pour une température extérieure égale à 20°C et à 12 heures en hiver pour une température extérieure de -10°C, ce qui traduit une augmentation de la puissance du système, d'environ 15% dans cet exemple de mode de réalisation de l'invention, couplée à augmentation du COP de la pompe à chaleur monobloc d'environ 20%.

La figure 5 représente en vue de côté un exemple de montage sur site d'un système selon l'invention couplé à un ventilo-convecteur 50 à eau chaude. Le montage s'effectue comme pour celui du radiateur à eau chaude décrit ci avant. Le ventilo convecteur 50 comporte une batterie, généralement à ailettes, et un thermostat de commande agissant sur la mise en service du ventilateur de brassage. Il convient d'asservir la mise en service du compresseur 12 et de la pompe de circulation 22 en fonction de la température souhaitée dans l'ambiance affichée sur le thermostat du ventilo convecteur.

Dans au moins une variante des modes de réalisation de l'invention présentés en référence aux figures 2 à 5, un système de chauffage et/ou de production d'eau chaude sanitaire selon l'invention peut être couplé à la fois à au moins un émetteur de chaleur, tel qu'un radiateur ou un ventilo-convecteur placé à l'intérieur d'un bâtiment, relié via une vanne trois voies à un échangeur d'un ballon d'eau chaude sanitaire.

La figure 6 représente une variante du mode de réalisation présenté en référence à la figure 2, se distinguant par la position du capteur évaporateur. Dans ce cas, le caisson 10 est placé, pour des raisons d'esthétique, derrière le panneau capteur 11. La porte d'accès démontable du caisson 10 est préférentiellement placée sur le côté de l'appareil ou sur le dessus.

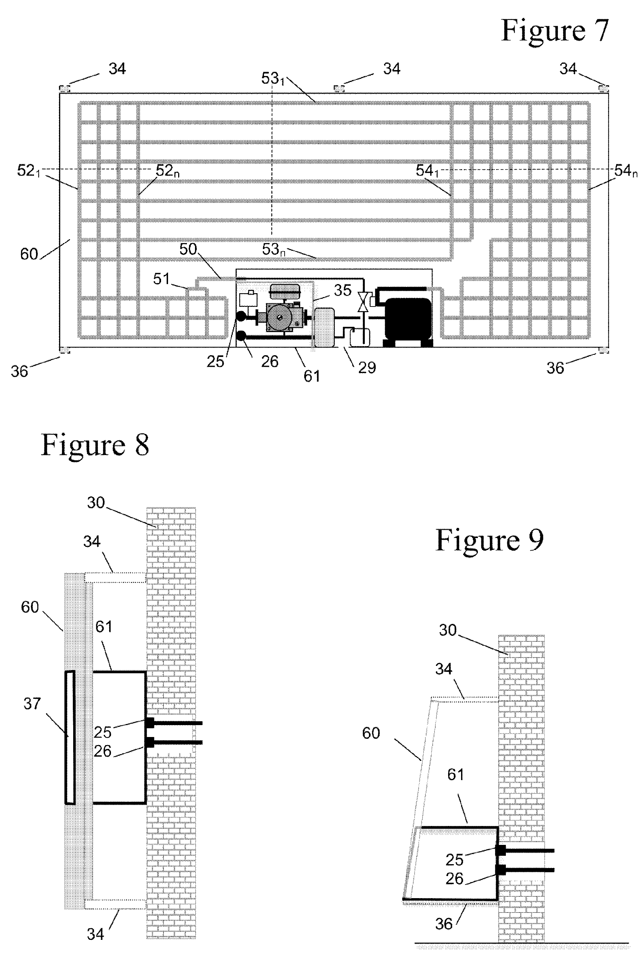

La figure 7 est un schéma d'un système selon l'invention dans lequel le caisson 61 abritant les autres composants est placé au milieu du capteur évaporateur 60, en partie basse, comme représenté sur le schéma de la figure 7. Dans un autre mode de réalisation de l'invention, il peut être prévu de placer le caisson en partie haute du panneau 60. Le capteur 60 est découpé au centre en bas (ou en haut suivant la configuration) afin de laisser libre l'accès aux divers composants du caisson 61. Les composants frigorifiques et hydrauliques sont placés horizontalement dans le caisson 61 au lieu de l'être verticalement comme dans le mode de réalisation présenté en référence à la figure 1. La configuration du circuit intégré du panneau capteur 60 est différente de celui illustré sur la figure 1, l'alimentation en liquide frigorigène détendu s'effectue dans le panneau par le canal 50 qui comporte un premier répartiteur 51. Des canaux 52₁....52ₙ remontent verticalement le mélange liquide et vapeur frigorigène puis le renvoie vers des canaux horizontaux 53₁....53ₙ où l'évaporation du liquide frigorigène augmente. Le mélange riche en vapeur descend vers des canaux 54₁....54ₙ où l'évaporation se termine, le gaz est alors surchauffé puis recueilli par le canal 55 avant aspiration par le compresseur. Une cloison étanche 35 sépare le caisson 61 en une partie frigorifique et une partie hydraulique. Un orifice 29 est pratiqué pour assurer la ventilation du compartiment thermodynamique en cas de perte de fluide frigorigène. Les passages 25, 26 permettent de relier le circuit de chauffage à l'intérieur du bâtiment.

La figure 8 et la figure 9 représentent un exemple de montage sur site de l'installation de la figure 7. Il est à remarquer que dans cet exemple, le capteur 60 est incliné de quelques degrés afin de mieux valoriser les apports solaires en hiver. Le caisson 61 comporte un panneau d'accès 37 situé en façade. Dans cette configuration, les pattes de fixation au mur supérieures 34 et inférieures 36 n'ont pas la même longueur. Les pattes 34 ont une longueur de l'ordre de 15 cm et les pattes 36 une longueur de l'ordre de 22 cm. Il peut être prévu que le caisson 61 présente, dans cette configuration, une forme trapézoïdale.

Les divers raccordements et explications de montage des systèmes selon l'invention décrits pour les figures 1 à 6 sont applicables aux figures 7 à 9 et réciproquement.

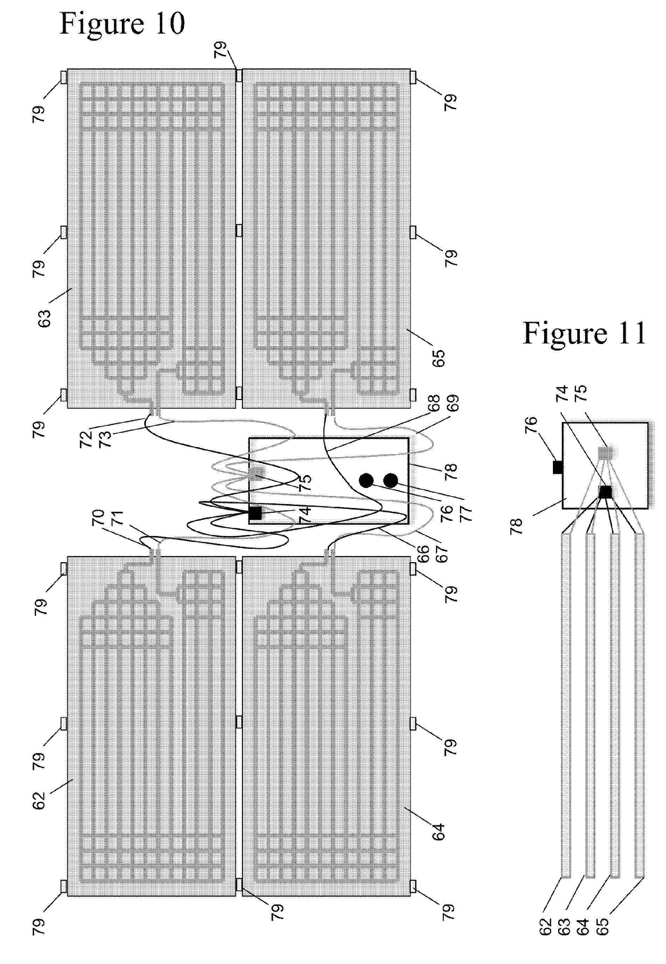

La figure 10 représente un système selon l'invention, avant son installation, comportant plusieurs capteurs évaporateurs 62, 63, 64, 65 reliés au caisson compresseur 78 par des tuyauteries souples réalisées par exemple en tube cuivre recuit de diamètre ¼".

L'alimentation en liquide des capteurs 62, 63, 64, 65 s'effectue à partir d'un distributeur de liquide 75 par des tuyauteries de même longueur respectivement 71,73, 67, 69. Le retour de vapeur des capteurs 62, 63, 64, 65 s'effectue par des tuyauteries de même longueur respectivement 70, 72, 66, 68 reliées à un collecteur d'aspiration 74.

La figure 11 représente le système de la figure 10 tel qu'il se trouve dans son emballage d'expédition. Les tuyauteries d'alimentation en liquide ainsi que les tuyauteries de retour gaz des capteurs 62, 63, 64, 65 ont une longueur adaptée permettant de manipuler en souplesse et sans risque les panneaux pour les mettre de la position emballage de la figure 11 à la position avant installation de la figure 10. Le caisson 78 est posé de préférence contre le mur du bâtiment pour assurer le raccordement du circuit de chauffage par les passages 76, 77. La conception du caisson 78 est dans son principe analogue à celle du caisson 10 de la figure 1 mais avec une puissance calorifique produite pouvant atteindre 8 kW et plus au lieu de 1 à 2 kW pour la version avec un seul capteur.

L'ensemble des composants hydrauliques peut également ne pas être installé dans le caisson 78 mais être placé à l'intérieur du bâtiment à chauffer.

Dans le mode de réalisation de la figure 10, les pattes de fixation 79 des capteurs comportent deux trous de fixation placés à 10 cm et 15 cm du mur, le trou à 10 cm assurant la fixation de la partie horizontale en haut des capteurs 62, 63, 64, 65 et le trou à 15 cm assurant la fixation de la partie horizontale en bas des capteurs.

Une application particulièrement avantageuse de l'invention est la rénovation du chauffage électrique.

L'invention peut également être mise en oeuvre dans l'habitat individuel, en neuf et en rénovation, afin d'assurer le chauffage central et/ou la production d'eau chaude sanitaire.

L'installation trouve également une application dans la mise en oeuvre des systèmes de plancher chauffant.

D'une manière générale et non limitative, l'invention peut être mise en oeuvre pour la fourniture de chauffage en hiver. L'invention peut notamment être utilisée pour le chauffage de locaux industriels, agricoles ou tertiaires.

## Revendications

1. Système de chauffage et/ou de production d'eau chaude sanitaire par pompe à chaleur monobloc configurée pour être montée à l'extérieur d'un bâtiment, **caractérisé en ce que** ladite pompe à chaleur forme un ensemble monobloc compact comprenant au moins un panneau capteur solaire atmosphérique à convection naturelle (11, 60, 62, 63, 64, 65) formant un évaporateur et un caisson (10, 61, 78) dans lequel sont placés un compresseur (12) et les autres composants frigorifiques de ladite pompe à chaleur, ledit ensemble monobloc compact étant apte à être fixé sur un mur (30) par des pattes de fixation (34, 36, 79) au niveau du panneau capteur (11, 60, 62, 63, 64, 65), destinées à éloigner le panneau capteur de quelques centimètres dudit mur, ledit panneau capteur étant raccordé au compresseur (12) de ladite pompe à chaleur, l'ensemble formé dudit panneau capteur, dudit compresseur et desdits autres composants frigorifiques étant chargé en fluide frigorigène, ledit caisson (10, 61, 78) étant lui même configuré de sorte à pouvoir être en liaison avec ledit mur (30),
**en ce que** ledit système comprend un circuit hydraulique d'eau ou de liquide antigel comportant un équipement appartenant au groupe comprenant :
- radiateur à eau-chaude (33) ;
- - ballon d'eau chaude (40) ;
- ventilo-convecteur à eau-chaude (50) ; et
- plancher chauffant ;
destiné à être raccordé à ladite pompe à chaleur monobloc par deux tuyauteries (31, 32) contenant de l'eau ou du liquide antigel,
et **en ce que** ledit caisson (10, 61, 78) comprend au moins un orifice (25,26) destiné à permettre le passage desdites deux tuyauteries.

2. Système de chauffage et/ou de production d'eau chaude sanitaire selon la revendication 1, **caractérisé en ce que** ledit fluide frigorigène est un hydrocarbure, par exemple du type R-600a ou R-290.

3. Système de chauffage selon l'une quelconque des revendication 1 à 2, **caractérisé en ce que** le circuit hydraulique comprend une pluralité de composants hydrauliques dont au moins une pompe, un vase d'expansion et un purgeur dégazeur ou une soupape, et **en ce que** ledit purgeur dégazeur ou ladite soupape (24) est installé(e) dans ledit caisson (10, 61, 78).

4. Système de chauffage et/ou de production d'eau chaude sanitaire selon la revendication 3, **caractérisé en ce que** ladite pompe (22), et/ou ledit vase d'expansion (28) sont placés à l'intérieur dudit caisson (10, 61, 78).

5. Système de chauffage et/ou de production d'eau chaude sanitaire selon l'une quelconque des revendications 1 à 4, **caractérisé en ce qu'**un orifice (29) est formé en partie basse dudit caisson (10, 61, 78) pour permettre l'évacuation dudit fluide frigorigène à l'extérieur dudit caisson en cas de fuite.

6. Système de chauffage et/ou de production d'eau chaude sanitaire selon l'une quelconque des revendications 3 et 4, **caractérisé en ce qu'**une cloison étanche séparatrice (35) est placée dans ledit caisson (10, 61, 78) entre lesdits composants hydrauliques et lesdits composants frigorifiques montés dans ledit caisson.

7. Système de chauffage et/ou de production d'eau chaude sanitaire selon l'une quelconque des revendications 1 à 6, **caractérisé en ce que** ledit compresseur (12) est à fréquence variable.

8. Système de chauffage et/ou de production d'eau chaude sanitaire selon l'une quelconque des revendications 1 à 9, **caractérisé en ce que** ledit panneau capteur formant évaporateur (60) comporte :
- une alimentation en liquide frigorigène reliée à un canal (50) puis à un premier répartiteur assurant une détente dudit fluide frigorigène (51),
- des canaux (52₁....52ₙ) destinés à remonter verticalement le mélange liquide et vapeur frigorigène puis à le renvoyer vers des canaux horizontaux (53₁....53ₙ) où l'évaporation du liquide frigorigène augmente, et
- des canaux (54₁....54ₙ) vers lesquels le mélange riche en vapeur descend et où l'évaporation se termine, le gaz surchauffé étant recueilli par le canal (55) avant aspiration par le compresseur (12).

9. Système de chauffage et/ou de production d'eau chaude sanitaire selon l'une quelconque des revendications 1 à 11, **caractérisé en ce que** lesdits panneaux capteurs (62, 63, 64, 65...) sont reliés audit caisson (78) par des tuyauteries souples afin de permettre l'emballage dudit caisson avec plusieurs capteurs (62, 63, 64, 65...), l'alimentation en fluide frigorigène desdits panneaux capteurs (62, 63, 64, 65...) s'effectuant à partir d'un distributeur de fluide frigorigène (75) par des tuyauteries de même longueur (71,73, 67, 69...), le retour de vapeur desdits panneaux capteurs (62, 63, 64, 65...) s'effectuant par des tuyauteries de même longueur (70, 72, 66, 68...) reliées à un collecteur d'aspiration (74).

10. Procédé de mise en place d'un système de chauffage et/ou de production d'eau chaude sanitaire selon la revendication 1 sur une paroi extérieure d'un bâtiment, **caractérisé en ce qu'**il comprend les étapes consistant à :
- obtenir un système de chauffage et/ou de production d'eau chaude sanitaire selon la revendication 1,
- percer la paroi extérieure du bâtiment de part en part, de sorte à obtenir un passage entre l'extérieur et l'intérieur, par exemple d'un diamètre de 60 millimètres, ledit passage entre l'extérieur et l'intérieur étant configuré pour permettre le passage des deux tuyauteries (31, 32) contenant de l'eau ou du liquide antigel ;
- fixer ladite pompe à chaleur monobloc sur ladite paroi extérieure, au niveau desdites pattes de fixation (34, 36, 79) et dudit caisson (10, 61, 78) de sorte que ledit orifice (25, 26) du caisson soit en vis-à-vis dudit passage entre l'extérieur et l'intérieur ;
- passer lesdites tuyauteries (31,32) au travers dudit passage entre l'extérieur et l'intérieur ;
- raccorder lesdites tuyauteries (31,32) audit radiateur à eau chaude ou audit ballon d'eau chaude ou audit ventilo-convecteur ou audit plancher chauffant.

## Patentansprüche

1. System zum Heizen und/oder zum Herstellen von Brauchwasser durch eine Monoblock-Wärmepumpe, das konfiguriert ist, um im Außenbereich eines Gebäudes angebracht zu werden, **dadurch gekennzeichnet, dass** die Wärmepumpe eine kompakte Monoblock-Baueinheit bildet, umfassend mindestens ein Sonnenkollektormodul mit natürlicher Luftkonvektion (11, 60, 62, 63, 64, 65), das einen Verdampfer bildet, und eine Box (10, 61, 78), in der ein Verdichter (12) und die anderen kältetechnischen Komponenten der Wärmepumpe angeordnet sind, wobei die kompakte Monoblock-Baugruppe geeignet ist, an einer Mauer (30) durch Befestigungselemente (34, 36, 79) in Höhe des Kollektormoduls (11, 60, 62, 63, 64, 65) befestigt zu werden, die dazu bestimmt sind, das Kollektormodul um einige Zentimeter von der Mauer zu beabstanden, wobei das Kollektormodul mit dem Verdichter (12) der Wärmepumpe verbunden ist,
wobei die Baugruppe, die aus dem Kollektormodul, dem Verdichter und den anderen kältetechnischen Komponenten gebildet wird, mit Kältemittel gefüllt ist, wobei die Box (10, 61, 78) ihrerseits derart konfiguriert ist, dass sie mit der Mauer (30) in Verbindung sein kann,
dadurch, dass das System einen Hydraulikkreis aus Wasser oder Frostschutzmittelflüssigkeit umfasst, der ein Gerät umfasst, das zur Gruppe, umfassend:
- Warmwasserheizkörper (33);
- Warmwasserbehälter (40);
- Warmwasser-Gebläsekonvektor (50); und
- Fußbodenheizung;
gehört,
das dazu bestimmt ist, an die Monoblock-Wärmepumpe über zwei Rohrleitungen (31, 32) angeschlossen zu werden, die Wasser oder Frostschutzmittelflüssigkeit enthalten,
und dadurch, dass die Box (10, 61, 78) mindestens eine Öffnung (25, 26) umfasst, die dazu bestimmt ist, den Durchgang der beiden Rohrleitungen zu ermöglichen.

2. System zum Heizen und/oder zum Herstellen von Brauchwasser nach Anspruch 1, **dadurch gekennzeichnet, dass** das Kältemittel ein Kohlenwasserstoff ist, zum Beispiel vom Typ R-600a oder R-290.

3. Heizungssystem nach einem der Ansprüche 1 bis 2, **dadurch gekennzeichnet, dass** der Hydraulikkreis mehrere Hydraulikkomponenten umfasst, darunter mindestens eine Pumpe, ein Ausdehnungsgefäß und einen Entlüfter-Gasabscheider oder ein Ventil, und dadurch, dass der Entüfter-Gasabscheider oder das Ventil (24) in der Box (10, 61, 78) angebracht ist.

4. System zum Heizen und/oder zum Herstellen von Brauchwasser nach Anspruch 3, **dadurch gekennzeichnet, dass** die Pumpe (22) und/oder das Ausdehnungsgefäß (28) im Innern der Box (10, 61, 78) angeordnet sind.

5. System zum Heizen und/oder Herstellen von Brauchwasser nach einem der Ansprüche 1 bis 4, **dadurch gekennzeichnet, dass** eine Öffnung (29) im unteren Teil der Box (10, 61, 78) ausgebildet ist, um bei einem Ausströmen die Ableitung des Kältemittels aus der Box heraus zu ermöglichen.

6. System zum Heizen und/oder zum Herstellen von Brauchwasser nach einem der Ansprüche 3 und 4, **dadurch gekennzeichnet, dass** eine dichte Trennwand (35) in der Box (10, 61, 78) zwischen den Hydraulikkomponenten und den kältetechnischen Komponenten, die in der Box angebracht sind, angeordnet ist.

7. System zum Heizen und/oder zum Herstellen von Brauchwasser nach einem der Ansprüche 1 bis 6, **dadurch gekennzeichnet, dass** die Frequenz des Verdichters (12) variabel ist.

8. System zum Heizen und/oder zum Herstellen von Brauchwasser nach einem der Ansprüche 1 bis 7, **dadurch gekennzeichnet, dass** das Kollektormodul, das den Verdampfer bildet (60), Folgendes umfasst:
- einen Kühlmittelzulauf, der mit einem Kanal (50), dann mit einem ersten Verteiler, der eine Entspannung des Kühlmittels (51) gewährleistet, verbunden ist,
- Kanäle (52₁....52ₙ), die dazu bestimmt sind, das Gemisch aus Kühlmittelflüssigkeit und Kühlmittelgas vertikal nach oben zu transportieren, es dann in horizontale Kanäle (53₁....53ₙ) zurückzuschicken, wo sich die Verdampfung des Kältemittels erhöht, und
- Kanäle (54₁....54ₙ) in die das gasreiche Gemisch absteigt und wo die Verdampfung endet, wobei das aufgeheizte Gas durch den Kanal (55) vor dem Ansaugen durch den Verdichter (12) gesammelt wird.

9. System zum Heizen und/oder zum Herstellen von Brauchwasser nach einem der Ansprüche 1 bis 8, **dadurch gekennzeichnet, dass** die Kollektormodule (62, 63, 64, 65...) mit der Box (78) über flexible Rohrleitungen verbunden sind, um die Verpackung der Box mit mehreren Kollektoren (62, 63, 64, 65...) zu ermöglichen, wobei die Kühlmittelzufuhr der Kollektormodule (62, 63, 64, 65...) ausgehend von einem Kühlmittelverteiler (75) über Rohrleitungen gleicher Länge (71, 73, 67, 69...) erfolgt, wobei die Gasrückführung der Kollektormodule (62, 63, 64, 65...) durch Rohrleitungen gleicher Länge (70, 72, 66, 68...) erfolgt, die mit einer Ansaugleitung (74) verbunden sind.

10. Verfahren zum Anbringen eines Systems zum Heizen und/oder zum Herstellen von Brauchwasser nach Anspruch 1 auf einer Außenwand eines Gebäudes, **dadurch gekennzeichnet, dass** es die folgenden Schritte umfasst:
- Erhalten eines Systems zum Heizen und/oder zum Herstellen von Brauchwasser nach Anspruch 1;
- Durchbohren der Außenwand des Gebäudes, um einen Durchgang zwischen der Außenseite und der Innenseite zu erhalten, zum Beispiel mit einem Durchmesser von 60 Millimeter, wobei der Durchgang der beiden Rohrleitungen (31, 32) Wasser oder Frostschutzmittelflüssigkeit enthält;
- Befestigen der Monoblock-Wärmepumpe auf der Außenwand in Höhe der Befestigungselemente (34, 36, 79) und der Box (10, 61,78) derart, dass die Öffnung (25, 26) der Box gegenüber dem Durchgang zwischen der Außenseite und der Innenseite liegt;
- Durchführen der Rohrleitungen (31, 32) durch den Durchgang zwischen der Außenseite und der Innenseite;
- Anschließen der Rohrleitungen (31, 32) an den Warmwasserheizkörper oder den Warmwasserbehälter oder den Gebläsekonvektor oder die Fußbodenheizung.

## Claims

1. A system for heating and/or producing domestic hot water by an integral heat pump configured to be mounted outside a building, **characterized in that** said heat pump forms a compact integral assembly comprising at least one atmospheric natural convection solar collector (11, 60, 62, 63, 64, 65) forming an evaporator and a box (10, 61, 78) in which are placed a compressor (12) and the other refrigerant circuit components of said heat pump, said compact integral assembly being able to be fixed onto a wall (30) by mounting brackets (34, 36, 79) at the level of the collector (11, 60, 62, 63, 64, 65) intended to separate the collector from said wall by a few centimeters, said collector being connected to the compressor (12) of said heat pump,
the assembly formed of said collector, said compressor and said other refrigerant circuit components being charged in refrigerant, said box (10, 61, 78) itself being configured so as to be able to be in connection with said wall (30),
**in that** said system comprises a hydraulic circuit for water or antifreeze comprising equipment belonging to the group comprising:
- hot water radiator (33);
- hot water tank (40);
- hot water fan coil unit (50); and
- underfloor heating system;
intended to be connected to said integral heat pump by two pipes (31, 32) containing water or antifreeze,
and **in that** said box (10, 61, 78) comprises at least one opening (25, 26) intended to enable the passage of said pipes.

2. The system for heating and/or producing domestic hot water according to claim 1, **characterized in that** said refrigerant is a hydrocarbon, for example of the R-600a or R-290 type.

3. The system for heating and/or producing domestic hot water according to any one of claims 1 to 2, **characterized in that** the hydraulic system comprises a plurality of hydraulic components including at least one pump, one expansion tank and a gas purger or valve, and **in that** said gas purger or said valve (24) is installed in said box (10, 61, 78).

4. The system for heating and/or producing domestic hot water according to claim 3, **characterized in that** said pump (22), and/or said expansion tank (28) are placed inside said box (10, 61, 78).

5. The system for heating and/or producing domestic hot water according to any one of claims 1 to 4, **characterized in that** an opening (29) is formed at the lower part of said box (10, 61, 78) to enable the evacuation of said refrigerant outside of said box in the event of leakage.

6. The system for heating and/or producing domestic hot water according to any one of claims 3 and 4, **characterized in that** a waterproof separating partition (35) is placed in said box (10, 61, 78) between said hydraulic circuit components and said refrigerant circuit components assembled in said box.

7. The system for heating and/or producing domestic hot water according to any one of claims 1 to 6, **characterized in that** said compressor (12) is a variable frequency compressor.

8. The system for heating and/or producing domestic hot water according to any one of claims 1 to 7, **characterized in that** said collector forming an evaporator (60) comprises:
- a refrigerant supply system connected to a channel (50) and then to a first distributor ensuring a release of said refrigerant (51),
- channels (52₁ ... 52ₙ) intended to raise vertically the refrigerant liquid and vapor mixture and then return it to horizontal channels (53₁ ... 53ₙ) where the refrigerant evaporation increases, and
- channels (54₁ ... 54ₙ) to which the vapor-rich mixture flows down and where the evaporation ends, the overheated gas being collected by the channel (55) before it is aspirated by the compressor (12).

9. The system for heating and/or producing domestic hot water according to any one of claims 1 to 8, **characterized in that** said collectors (62, 63, 64, 65, etc.) are connected to said box (78) by flexible pipes enabling said box to be packed with several collectors (62, 63, 64, 65, etc.), the supply of refrigerant to said collectors (62, 63, 64, 65, etc.) being performed from a refrigerant distributor (75) by pipes of the same length (71, 73, 67, 69, etc.), the return of vapor from said collectors (62, 63, 64, 65, etc.) being performed by pipes of the same length (70, 72, 66, 68, etc.) connected to a suction collector (74).

10. A method of placing a system for heating and/or producing domestic hot water according to claim 1 on an outer wall of a building, **characterized in that** the method comprises the steps consisting of:
- obtaining a system for heating and/or producing domestic hot water according to claim 1,
- piercing the outer wall of the building right through so as to obtain a passage between the outside and the inside, for example of a diameter of 60 millimeters, said passage between the outside and the inside being configured to enable the passage of two pipes (31, 32) containing water or antifreeze;
- fixing said integral heat pump onto said outer wall at the level of said mounting brackets (34, 36, 79) and said box (10, 61, 78) such that said opening (25, 26) of the box is opposite said passage between the outside and the inside;
- passing said pipes (31, 32) through said passage between the outside and the inside;
- connecting said pipes (31, 32) to said hot water radiator or to said hot water tank or to said fan coil unit or to said underfloor heating system.
